# EUROPEAN PATENT APPLICATION

(11) **EP 4 822 820 A1**
(43) Date of publication of application: **14.10.2026**
(21) Application number: 24914833.9
(22) Date of filing: 20.08.2024
(51) Int. Cl.: H01M 10/613, H01M 10/6556

(54) **MONITORING METHOD FOR ENERGY STORAGE APPARATUS, AND ELECTRIC APPARATUS AND ENERGY STORAGE APPARATUS**

(30) Priority: 03.01.2024 CN 202420014895 U
(71) Applicant: Contemporary Amperex Technology Co., Limited, Ningde, Fujian 352100 (CN)
(72) Inventor: YANG, Lei, Ningde, Fujian 352100 (CN); ZHU, Cuicui, Ningde, Fujian 352100 (CN); WANG, Shaofei, Ningde, Fujian 352100 (CN); WEI, Yimin, Ningde, Fujian 352100 (CN)
(74) Representative: Aera A/S
(86) International application number: PCT/CN2024/113389
(87) International publication number: WO 2025/145611

(57) **Abstract**

Disclosed in the present application are a monitoring method for an energy storage apparatus, and an electric apparatus and an energy storage apparatus. The energy storage apparatus includes a housing, an energy storage unit group, and a temperature and humidity sensor, where the energy storage unit group and the temperature and humidity sensor are arranged inside the housing. The monitoring method includes: measuring a real-time temperature and a real-time humidity inside a housing by means of a temperature and humidity sensor; determining a dew point temperature matching the real-time humidity, and comparing the real-time temperature with the dew point temperature, so as to obtain a comparison result; and executing a processing policy matching the comparison result. By means of the method, the present application can monitor the environment inside an energy storage apparatus in real time, and can perform corresponding processing on the environment inside the energy storage apparatus, thereby more effectively maintaining the operation and usage of the energy storage apparatus during the process of using the energy storage apparatus.

## Description

This application claims priority to Chinese patent application No. 2024200148953, filed on January 3, 2024 and entitled "MONITORING METHOD FOR ENERGY STORAGE APPARATUS, ELECTRIC APPARATUS, AND ENERGY STORAGE APPARATUS", which is incorporated herein by reference in its entirety.

### TECHNICAL FIELD

This application relates to the field of battery technologies, and in particular, to a monitoring method for an energy storage apparatus, an electric apparatus, and an energy storage apparatus.

### BACKGROUND

A battery (Battery) is a cup, tank, or other container or partial space of a composite container which contains an electrolyte solution and metal electrodes so as to produce current. It is an apparatus capable of converting chemical energy into electrical energy. With the development of science and technology, batteries that have the advantages of convenient portability, easy charging and discharging operations, and long-term stable power supply are widely used in automobiles, household appliances, aerospace, and other fields.

In a structure using energy storage apparatuses such as battery cells, conductive elements such as modules, copper bars, and distribution boxes are usually provided. However, the internal environment of the energy storage apparatus changes during operation and use of the energy storage apparatus, thereby affecting each conductive element, further affecting the internal operation of the conductive element, and even directly affecting the operation and use of the energy storage apparatus.

### SUMMARY

In view of the above problems, this application provides a monitoring method for an energy storage apparatus, an electric apparatus, and an energy storage apparatus, which can monitor the environment inside the energy storage apparatus in real time and can perform corresponding processing corresponding to the environment inside the energy storage apparatus in time, thereby being able to more effectively maintain the operation and use of the energy storage apparatus during the use of the energy storage apparatus.

According to a first aspect, this application provides a monitoring method for an energy storage apparatus. The energy storage apparatus includes a housing, an energy storage unit group, and a temperature and humidity sensor. The energy storage unit group and the temperature and humidity sensor are arranged inside the housing. The method includes:
detecting a real-time temperature and a real-time humidity inside the housing by means of the temperature and humidity sensor;
determining a dew point temperature matching the real-time humidity, and comparing magnitudes of the real-time temperature and the dew point temperature to obtain a comparison result; and
executing a processing policy matching the comparison result.

In the technical solution of the embodiments of this application, the temperature and humidity sensor is arranged inside the energy storage apparatus, and the dew point temperature corresponding to the internal environment of the energy storage apparatus is calculated through the real-time humidity and real-time temperature detected by the temperature and humidity sensor. Then the real-time temperature is further compared with the dew point temperature to obtain the comparison result that can reflect the internal environment of the energy storage apparatus, and targeted corresponding processing is performed according to the current real-time environment inside the energy storage apparatus. With such arrangement, not only the internal environment of the energy storage apparatus can be monitored in real time, but also corresponding processing can be performed in real time for the current environment inside the energy storage apparatus. Therefore, during the use of the energy storage apparatus, conductive elements inside the energy storage apparatus are less likely to be affected by the internal environment thereof, and the operation and use of the energy storage apparatus can be more effectively maintained.

In some embodiments, the determining a dew point temperature matching the real-time humidity includes: determining the dew point temperature matching the real-time humidity in an enthalpy diagram.

By substituting the real-time humidity into the enthalpy diagram to obtain the dew point temperature, the process of obtaining the dew point temperature can be simplified, making the monitoring method for an energy storage apparatus more efficient. Moreover, obtaining the dew point temperature by using the enthalpy diagram can make the processing result more accurate and can more effectively protect the energy storage apparatus.

In some embodiments, the executing a processing policy matching the comparison result includes: if the comparison result is that the real-time temperature is less than or equal to the dew point temperature, outputting warning information prompting that condensation likely occurs in the housing.

By outputting the warning information prompting that condensation likely occurs in the housing when the real-time temperature is less than or equal to the dew point temperature, a warning can be given in time for the condensation phenomenon inside the housing of the energy storage apparatus, and a danger inside the housing of the energy storage apparatus can be fed back in time, so as to facilitate further maintenance of the energy storage apparatus.

In some embodiments, the energy storage apparatus includes a liquid cooling apparatus. The liquid cooling apparatus is arranged outside the housing and is configured to cool the housing and the energy storage unit group through circulation of cooling liquid.

The executing a processing policy matching the comparison result includes: if the comparison result is that the real-time temperature is less than or equal to the dew point temperature, controlling the liquid cooling apparatus to adjust a temperature and/or circulation speed of the cooling liquid, thereby making the real-time temperature greater than the dew point temperature.

By arranging the liquid cooling apparatus in the energy storage apparatus and, after determining that the real-time temperature is less than or equal to the dew point temperature, the liquid cooling apparatus can be directly used to adjust the real-time temperature inside the energy storage apparatus, so that the real-time temperature can be quickly made greater than the dew point temperature. This allows the internal environment of the energy storage apparatus to quickly escape from condensation conditions, thereby achieving precise control of the internal environment of the energy storage apparatus; and can also reduce the accumulation of condensed water and excessive internal humidity inside the energy storage apparatus in time, thereby reducing the occurrence of the conductive elements inside the energy storage apparatus being in a condensation environment for a long time, so as to more effectively protect the energy storage apparatus.

In some embodiments, the controlling the liquid cooling apparatus to adjust a cooling temperature and/or circulation speed of the cooling liquid includes:
calculating a temperature difference between the dew point temperature and the real-time temperature; and
controlling the liquid cooling apparatus to adjust the temperature and/or circulation speed of the cooling liquid, according to a correspondence between the temperature difference and the temperature and/or circulation speed of the cooling liquid.

By using the temperature difference between the dew point temperature and the real-time temperature to adjust the temperature and/or circulation speed of the cooling liquid of the liquid cooling apparatus, the control process performed by the liquid cooling apparatus on the internal environment of the energy storage apparatus can be made more precise and efficient; and the real-time temperature inside the energy storage apparatus can be quickly raised to be higher than the dew point temperature, thereby reducing the accumulation of condensed water and excessive internal humidity inside the energy storage apparatus, and more effectively maintaining the operation and use of the energy storage apparatus.

In some embodiments, the energy storage apparatus includes a liquid cooling apparatus. The liquid cooling apparatus is arranged outside the housing. The liquid cooling apparatus includes a plurality of parallel liquid cooling pipelines, and each of the liquid cooling pipelines is configured to cool the housing and the energy storage unit group through circulation of cooling liquid when turned on.

The executing a processing policy matching the comparison result includes: if the comparison result is that the real-time temperature is less than or equal to the dew point temperature, controlling the liquid cooling apparatus to control at least one of the liquid cooling pipelines to be turned on, so that the real-time temperature is greater than the dew point temperature.

By arranging the plurality of parallel liquid cooling pipelines, the contact area between the liquid cooling apparatus and the housing can be increased, thereby improving the cooling speed of the liquid cooling apparatus, and more quickly adjusting the real-time temperature inside the housing, and more effectively maintaining the stability of the internal environment of the housing of the energy storage apparatus. Moreover, by controlling the liquid cooling apparatus to control the at least one of the liquid cooling pipelines to be turned on to cool the housing and the energy storage unit group, the temperature adjustment speed of the liquid cooling apparatus can be enhanced, making the regulation process of the liquid cooling apparatus more flexible.

In some embodiments, the controlling the liquid cooling apparatus to control the cooling liquid to enter at least one of the liquid cooling pipelines includes: calculating a temperature difference between the dew point temperature and the real-time temperature; and determining the turn-on number of liquid cooling pipelines that matches the temperature difference, and controlling the liquid cooling apparatus to turn on the turn-on number of liquid cooling pipelines.

Using the temperature difference between the dew point temperature and the real-time temperature to determine the matching turn-on number of liquid cooling pipelines can make the process of the liquid cooling apparatus adjusting the real-time temperature more efficient, and can reduce energy consumption while achieving efficient temperature control.

In some embodiments, the determining the turn-on number of liquid cooling pipelines that matches the temperature difference, and controlling the liquid cooling apparatus to turn on the turn-on number of liquid cooling pipelines includes: determining the turn-on number of liquid cooling pipelines that matches the temperature difference, and determining a temperature and/or circulation speed of the cooling liquid in the liquid cooling pipelines to be turned on; and controlling the liquid cooling apparatus to turn on the turn-on number of liquid cooling pipelines, and controlling the corresponding liquid cooling pipeline to perform circulating cooling according to the determined temperature and/or circulation speed of the cooling liquid.

Using the turn-on number of liquid cooling pipelines to calculate and determine the temperature and/or circulation speed of the cooling liquid in the liquid cooling pipeline can make the temperature control process of the energy storage apparatus more standardized and more efficient; and can also control energy consumption and reduce costs while high-degree temperature control inside the energy storage apparatus is performed. This is not prone to cause resource waste.

In some embodiments, the controlling the liquid cooling apparatus to control at least one of the liquid cooling pipelines to be turned on includes:
controlling the liquid cooling apparatus to control the at least one of the liquid cooling pipelines to be turned on, and adjusting a temperature and/or circulation speed of the cooling liquid in the corresponding liquid cooling pipeline.

By controlling at least one liquid cooling pipeline to be turned on and adjusting the temperature and/or circulation speed of the cooling liquid inside the liquid cooling pipeline in time to ensure that the real-time temperature is greater than the dew point temperature, the temperature control process performed by the liquid cooling apparatus on the interior of the energy storage apparatus can be made faster and more convenient, thereby reducing condensed water accumulation and excessive internal humidity inside the energy storage apparatus.

In some embodiments, the detecting a real-time temperature and a real-time humidity inside the housing by means of the temperature and humidity sensor includes:
in a process of outputting electric energy or charging, detecting the real-time temperature and real-time humidity inside the housing by means of the temperature and humidity sensor.

Detecting the real-time temperature and real-time humidity inside the housing in the working process of electric energy outputting or charging of the energy storage apparatus can more effectively maintain the stability of the internal environment of the housing during the use of the energy storage apparatus.

In some embodiments, the energy storage apparatus includes a liquid cooling apparatus. The liquid cooling apparatus is arranged outside the housing and is configured to cool the housing and the energy storage unit group through circulation of cooling liquid.

After determining that the real-time temperature is less than or equal to the dew point temperature, the method includes: if the comparison result is that the real-time temperature is greater than the dew point temperature, controlling the liquid cooling apparatus to turn on a heat preservation mode, so as to control a temperature and/or circulation speed of the cooling liquid according to the heat preservation mode, so that a difference between the real-time temperature and the dew point temperature is less than a preset temperature threshold.

Turning on the heat preservation mode after determining that the real-time temperature inside the housing is greater than the dew point temperature can maintain the stability of the internal environment of the energy storage apparatus as much as possible, thereby making it less likely for condensation or excessive humidity to occur inside the housing, and more effectively preventing condensation from occurring inside the housing of the energy storage apparatus.

According to a second aspect, this application provides an electric apparatus, which includes an energy storage apparatus and a battery management system. The energy storage apparatus includes a housing, an energy storage unit group, and a temperature and humidity sensor. The energy storage unit group and the temperature and humidity sensor are arranged inside the housing. The battery management system is electrically connected to the temperature and humidity sensor and is configured to implement the monitoring method for an energy storage apparatus in the above embodiments.

According to a third aspect, this application provides an energy storage apparatus, which includes a housing, an energy storage unit group, a temperature and humidity sensor, and a processor. The energy storage unit group is arranged inside the housing. The temperature and humidity sensor is arranged inside the housing. The processor is arranged on the housing, is electrically connected to the temperature and humidity sensor, and is configured to execute the monitoring method for an energy storage apparatus in the above embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like parts are denoted by like reference signs. In the accompanying drawings:
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic block diagram of a structural relationship of an energy storage apparatus according to some embodiments of this application;
FIG. 5 is a schematic flowchart of steps of a monitoring method for an energy storage apparatus according to some embodiments of this application;
FIG. 6 is a schematic block diagram of a structural relationship of an electric apparatus according to some embodiments of this application; and
FIG. 7 is a schematic flowchart of steps of a monitoring method for an energy storage apparatus according to some other embodiments of this application.

Reference signs in specific embodiments are as follows:
vehicle 1000a;
battery 100, controller 200, motor 300,
box 10a, first portion 11a, second portion 12a;
battery cell 1a, shell 100a, end cover 120a, housing 110a, electrode terminal 200a, opening 111a, electrode assembly 500a, tab 501a;
energy storage apparatus 10, housing 110, energy storage unit group 120, temperature and humidity sensor 130, processor 140, liquid cooling apparatus 150, liquid cooling pipeline 151;
electric apparatus 2, and battery management system 20.

### DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute a limitation to the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "comprise", and "have" and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the descriptions of embodiments of this application, the term "and/or" in this application describes only an association relationship for describing associated objects and represents that three relationships may exist. For example, A and/or B may represent the following three cases: A alone, both A and B, and B alone. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, or may refer to a direct connection, an indirect connection via an intermediate medium, or an interaction between two elements. Persons of ordinary skill in the art can understand specific meanings of these terms in the embodiments of this application as suitable to specific situations.

With the development of battery technology, battery cells are applied in more and more fields and gradually replace traditional fossil energy in the field of automotive power. Battery cells can store chemical energy and controllably convert chemical energy into electrical energy. In rechargeable battery cells, active materials can be activated by charging after discharge to continue to be used.

In a structure using energy storage apparatuses such as battery cells, conductive elements such as modules, copper bars, and distribution boxes are usually provided. However, the internal environment of the energy storage apparatus affects each conductive element, further affecting the operation of the internal conductive element, and even directly affecting the operation and use of the energy storage apparatus. For example, a water-cooling system is also provided in the energy storage apparatus to perform temperature control on the entire energy storage apparatus. However, when the water-cooling system cools the energy storage apparatus, water mist or condensed water droplets are easily generated. The water mist or condensed water droplets greatly reduce the electrical clearance and creepage distance, directly affect the conductivity of the internal conductive elements, and thus directly affect the operation and use of the energy storage apparatus.

In order to maintain the stability inside the energy storage apparatus, sensors such as temperature and humidity sensors can be arranged inside the energy storage apparatus to monitor the temperature and humidity inside the energy storage apparatus in real time. When the temperature and humidity inside the energy storage apparatus change and reach conditions that affect the conductive elements in the energy storage apparatus, the internal environment of the energy storage apparatus is processed in time, so that the conductive elements in the energy storage apparatus are separated from a dangerous environment, thereby maintaining the stability inside the energy storage apparatus.

In view of the above considerations, this application provides a monitoring method for an energy storage apparatus, an electric apparatus, and an energy storage apparatus. A temperature and humidity sensor is arranged inside the energy storage apparatus, a dew point temperature corresponding to an internal environment of the energy storage apparatus is calculated through a real-time humidity and a real-time temperature detected by the temperature and humidity sensor, and the real-time temperature is further compared with the dew point temperature to obtain a comparison result that can reflect the internal environment of the energy storage apparatus, so that targeted corresponding processing is performed according to the current real-time environment inside the energy storage apparatus. With such arrangement, not only the internal environment of the energy storage apparatus can be monitored in real time, but also corresponding processing can be performed in real time for the current environment inside the energy storage apparatus. Therefore, during the use of the energy storage apparatus, conductive elements inside the energy storage apparatus are less likely to be affected by the internal environment thereof, and the operation and use of the energy storage apparatus can be more effectively maintained.

The energy storage apparatus disclosed in the embodiments of this application can be used in electric apparatuses that use batteries as power sources or in various energy storage systems that use batteries as energy storage elements.

The electric apparatus may be, but is not limited to, a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description in the following embodiments, an electric apparatus of an embodiment of this application being a vehicle 1000a is used as an example for description.

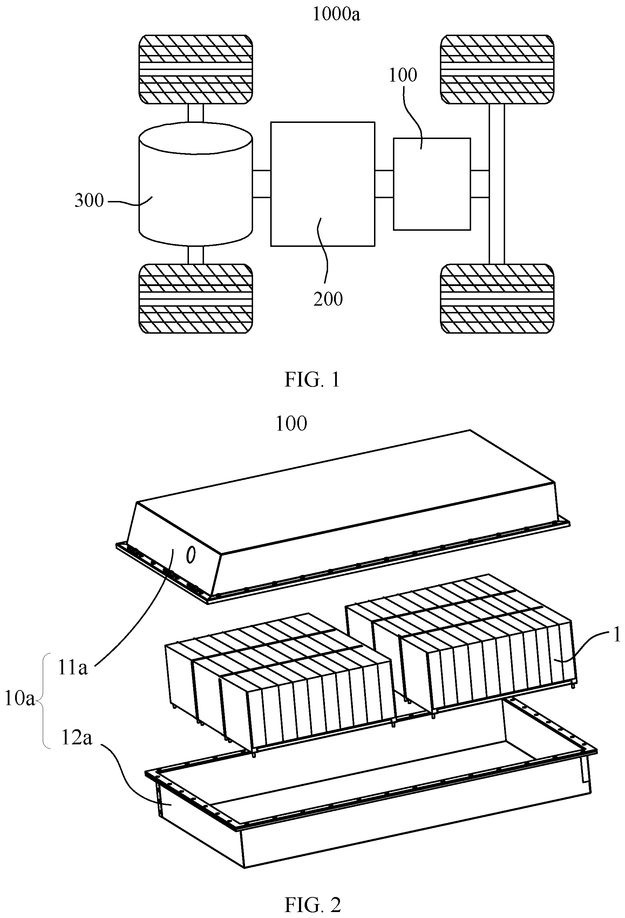

Referring to FIG. 1, the vehicle 1000a may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000a is provided with a battery 100 inside, where the battery 100 may be disposed at the bottom, front or rear of the vehicle 1000a. The battery 100 may be configured to supply power to the vehicle 1000a. For example, the battery 100 may be used as an operational power source for the vehicle 1000a. The vehicle 1000a may further include a controller 200 and a motor 300, where the controller 200 is configured to control the battery 100 to supply power to the motor 300, for example, to satisfy a working electricity need during start, navigation, and driving of the vehicle 1000a.

In some embodiments of this application, the battery 100 can be used as not only the operational power source for the vehicle 1000a but also a driving power source for the vehicle 1000a, replacing or partially replacing fossil fuel or natural gas to provide driving traction for the vehicle 1000a.

In some embodiments, the battery 100 may be an energy storage apparatus. The energy storage apparatus includes an energy storage container, an energy storage cabinet, or the like.

The battery 100 mentioned in the embodiments of this application is a single physical module that includes one or more battery cells 1a for providing a higher voltage and capacity.

In the embodiments of this application, the battery cell 1a may be a secondary battery. The secondary battery refers to a battery cell that can be reused by charging to activate active materials after the battery cell is discharged. Each battery cell 1a may alternatively be a primary battery.

The battery cell 1a includes but is not limited to a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, and a lead-acid battery. The battery cell 1a may be cylindrical, flat, rectangular, or in another shape.

In some embodiments, the battery 100 may be a battery module. When there are multiple battery cells 1a, the multiple battery cells 1a are arranged and fixed to form one battery module.

In some embodiments, referring to FIG. 2, the battery 100 may be a battery pack. The battery pack includes a box 10a and battery cells 1a, with the battery cells 1a or battery modules accommodated within the box 10a.

In some embodiments, the box 10a may serve as a part of a chassis structure of the vehicle 1000a. For example, a part of the box 10a may be at least a part of the chassis structure of the vehicle 1000a. Alternatively, a part of the box 10a may be at least a part of a cross member and longitudinal rail of the vehicle 1000a.

Referring to FIG. 2, the battery 100 includes a box 10a and a battery cell 1a, where the battery cell 1a is accommodated in the box 10a. The box 10a is configured to provide an accommodating space for the battery cell 1a. The box 10a may be a variety of structures. In some embodiments, the box 10a may include a first portion 11a and a second portion 12a. The first portion 11a and the second portion 12a fit together such that the first portion 11a and the second portion 12a jointly define a space for accommodating the battery cell 1a. The second portion 12a may be a hollow structure with one end open, and the first portion 11a may be a plate structure, where the first portion 11a covers the open side of the second portion 12a so that the first portion 11a and the second portion 12a jointly define the accommodating space. Alternatively, the first portion 11a and the second portion 12a may both be hollow structures with one side open, where the open side of the first portion 11a is engaged with the open side of the second portion 12a. Certainly, the box 10a formed by the first portion 11a and the second portion 12a may be of a variety of shapes, for example, cylinder or cuboid.

In the battery 100, the battery cell 1a may be present in plurality, and the plurality of battery cells 1a may be connected in series, parallel, or series-parallel, where being connected in series-parallel means a combination of series and parallel connections of the plurality of battery cells 1a. The plurality of battery cells 1a may be directly connected in series, parallel, or series-parallel, and then an entirety of the plurality of battery cells 1a is accommodated in the box 10a. Certainly, the battery 100 may be formed by a plurality of battery cells 1a being connected in series, parallel, or series-parallel first to form a battery module and then a plurality of battery modules being connected in series, parallel, or series-parallel to form an entirety which is accommodated in the box 10a. The battery 100 may further include other structures. For example, the battery 100 may further include a busbar configured to implement electrical connection between the plurality of battery cells 1a.

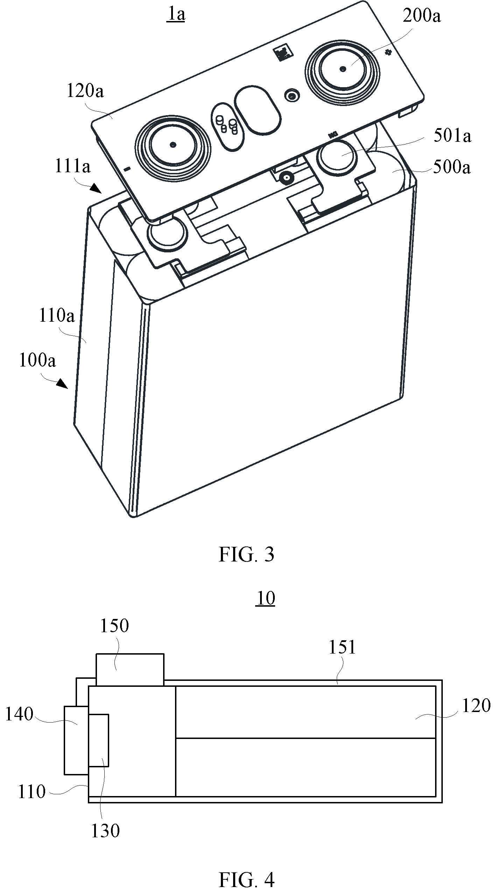

Referring to FIG. 3, the battery cell 1a refers to a smallest unit constituting a battery. In the embodiments, the cylindrical battery cell 1a is taken as an example for description. As shown in FIG. 3, the battery cell 1a includes a shell 100a, an electrode assembly 500a, and other functional components.

In some embodiments, the shell 100a is configured to package components like the electrode assembly 500a and electrolyte. The shell 100a may be a steel, aluminum, plastic (such as polypropylene), or composite metal (such as copper-aluminum composite shell) shell, an aluminum-plastic film, or the like.

The shell 100a may include an end cover 120a and a housing 110a. The end cover 120a refers to a component that covers an opening of the housing 110a to separate an internal environment of the battery cell 1a from an external environment thereof. Without limitation, a shape of the end cover 120a may fit with that of the housing 110a, so that the end cover can match the housing 110a. Optionally, the end cover 120a may be made of materials with specified hardness and strength (for example, aluminum alloy), so that the end cover 120a is less likely to deform under extrusion and collision, enabling the battery cell 1a to have a higher structural strength and enhanced safety performance. The end cover 120a may be provided with functional components such as an electrode terminal 200a. The electrode terminal 200a may be configured to be electrically connected to the electrode assembly 500a for outputting or inputting electric energy of the battery cell 1a. In some embodiments, the end cover 120a may also be provided with a pressure relief mechanism configured to relieve internal pressure when the internal pressure or temperature in the battery cell 1a reaches a threshold. The end cover 120a may also be made of various materials, for example, including but not limited to copper, iron, aluminum, stainless steel, aluminum alloy, or plastic. In some embodiments, an insulator may also be provided on an inner side of the end cover 120a. The insulator may be configured to separate an electrically connected component in the housing 110a from the end cover 120a to reduce the risk of short circuit. For example, the insulator may be made of plastic, rubber, or the like.

The housing 110a is an assembly configured to form an internal environment of the battery cell 1a together with the end cover 120a, where the formed internal environment may be used for accommodating the electrode assembly 500a, an electrolyte, and other components. The housing 110a and the end cover 120a may be independent components, and an opening 111a may be provided in the housing 110a, so that the end cover 120a can close the opening 111a to form the internal environment of the battery cell 1a. Without limitation, the end cover 120a and the housing 110a may also be integrated. Specifically, the end cover 120a and the housing 110a may form a shared connection surface before other components are disposed inside the housing, and then the end cover 120a covers the housing 110a when the interior of the housing 110a needs to be enclosed. The housing 110a may be of various shapes and sizes, such as a cuboid shape, a cylindrical shape, and a hexagonal prism shape. Specifically, a shape of the housing 110a may be determined according to a specific shape and size of the electrode assembly 500a. The housing 110a may also be made of various materials, for example, including but not limited to copper, iron, aluminum, stainless steel, aluminum alloy, or plastic.

The electrode assembly 500a is a component in which electrochemical reactions occur in the battery cell 1a. The housing 110a may include one or more electrode assemblies 500a.

In some embodiments, the electrode assembly 500a includes a positive electrode, a negative electrode and a separator. During charging and discharging of the battery cell, active ions (for example, lithium ions) migrate between the positive electrode and the negative electrode for intercalation and deintercalation. The separator is sandwiched between the positive electrode and the negative electrode to prevent short circuits between the positive and negative electrodes and allow active ions to pass through.

In some embodiments, the positive electrode may be a positive electrode plate. The positive electrode plate may include a positive electrode current collector and a positive electrode active material disposed on at least one surface of the positive electrode current collector.

For example, the positive electrode current collector includes two opposite surfaces in its thickness direction, and the positive electrode active material layer is disposed on either or both of the two opposite surfaces of the positive electrode current collector.

For example, the positive electrode current collector may be a metal foil or a composite current collector. For example, the metal foil may be made of silver-plated aluminum or stainless steel, stainless steel, copper, aluminum, nickel, carbon electrode, carbon, nickel, titanium, or the like. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, matrices of polypropylene, polyethylene terephthalate, polybutylene terephthalate, polystyrene, and polyethylene).

For example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. An example of the lithium-containing phosphate may include but is not limited to at least one of lithium iron phosphate (for example, LiFePO₄ (or LFP for short)), composite materials of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon. An example of the lithium transition metal oxide may include, but is not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi0.5Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof.

In some embodiments, the negative electrode can be a negative electrode plate. The negative electrode plate can include a negative electrode current collector.

For example, the negative electrode current collector may be metal foil, foam metal, or a composite current collector. For example, the metal foil may be made of silver-plated aluminum or stainless steel, stainless steel, copper, aluminum, nickel, carbon electrode, carbon, nickel, titanium, or the like. The foam metal may be foam nickel, foam copper, foam aluminum, foam alloys, foam carbon, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, matrices of polypropylene, polyethylene terephthalate, polybutylene terephthalate, polystyrene, and polyethylene).

For example, the negative electrode plate may include a negative electrode current collector and a negative electrode active material disposed on at least one surface of the negative electrode current collector.

In an example, the negative electrode current collector has two opposite surfaces in a thickness direction thereof, and the negative electrode active material is disposed on either or both of the two opposite surfaces of the negative electrode current collector.

For example, the negative electrode active material may be a negative electrode active material for battery cells well known in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may alternatively use other conventional materials that can be used as negative electrode active materials for batteries. One of these negative electrode active materials may be used alone, or two or more of them may be used in combination.

In some embodiments, the positive electrode current collector may be made of aluminum, and the negative electrode current collector may be made of copper.

In some embodiments, the electrode assembly 500a further includes a separator, and the separator is disposed between the positive electrode and the negative electrode.

In some embodiments, the separator is a separator film. The separator film is not limited to any particular type in this application, and may be any well-known porous separator film with good chemical stability and mechanical stability.

In an example, a main material of the separator film may be selected from at least one of glass fiber, non-woven fabrics, polyethylene, polypropylene, polyvinylidene fluoride, and ceramics. The separator film may be a single-layer film or a multi-layer composite film, and is not particularly limited. When the separator film is a multi-layer composite film, all layers may be made of the same or different materials, which is not particularly limited. The separator may be an independent component arranged between the positive electrode and the negative electrode, or may be attached to the surfaces of the positive electrode and the negative electrode.

In some embodiments, the separator is a solid electrolyte. The solid electrolyte is arranged between the positive electrode and the negative electrode, and functions to transmit ions as well as isolate the positive electrode from the negative electrode.

In some embodiments, the battery cell further includes an electrolyte, and the electrolyte serves to conduct ions between the positive electrode and the negative electrode. The electrolyte is not specifically limited to any particular type in this application, and may be selected depending on needs. The electrolyte may be in a liquid state, a gel state, or a solid state.

The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis(trifluoromethanesulfonyl)imide, lithium trifluoromethanesulfonate, lithium difluorophosphate, lithium difluorooxalatoborate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone. The solvent may alternatively be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether and crown ether.

The gel electrolyte includes an electrolyte framework network made of a polymer, and is compounded with an ionic liquid and a lithium salt.

The solid electrolyte includes a polymer solid electrolyte, an inorganic solid electrolyte, and a composite solid electrolyte.

For example, the polymer solid electrolyte may be polyether (polyethylene oxide), polysiloxane, polycarbonate, polyacrylonitrile, polyvinylidene fluoride, polymethyl methacrylate, a single-ion polymer, poly(ionic liquid)-lithium salt, cellulose, or the like.

For example, the inorganic solid electrolyte may be one or more of an oxide solid electrolyte (crystalline perovskite, sodium superionic conductor, garnet, or amorphous LiPON thin film), a sulfide solid electrolyte (crystalline lithium superionic conductor (lithium germanium phosphorus sulfide, or argyrodite), or amorphous sulfide), a halide solid electrolyte, a nitride solid electrolyte, and a hydride solid electrolyte.

For example, the composite solid electrolyte is formed by adding an inorganic solid electrolyte filler into a polymer solid electrolyte.

In some embodiments, the electrode assembly 500a is a wound structure. The positive electrode plate and the negative electrode plate are wound to form the wound structure.

In some embodiments, the electrode assembly 500a is provided with a tab 501a, and the tab 501a can lead current out from the electrode assembly 500a. The tab includes a positive tab and a negative tab. The positive tab and the negative tab may both be located at one end of the body portion or be located at two ends of the body portion respectively. During charge and discharge of the battery 100, a positive electrode active material and a negative electrode active material react with an electrolyte, and the tabs 501a are connected to the electrode terminals 200a to form a current loop.

The following is an exemplary description of the energy storage apparatus in the embodiments of the energy storage apparatus.

In some embodiments, as shown in FIG. 4, an energy storage apparatus 10 includes a housing 110, an energy storage unit group 120, a temperature and humidity sensor 130, and a processor 140. The energy storage unit group 120 may be arranged inside the housing 110. The temperature and humidity sensor 130 may be arranged inside the housing 110. The processor 140 may be arranged on the housing 110, is electrically connected to the temperature and humidity sensor 130, and is configured to execute the monitoring method for the energy storage apparatus 10.

The energy storage apparatus 10 refers to a device that can store energy through a medium or element and release energy when needed. The energy storage apparatus 10 can realize charging and discharging processes. For example, the energy storage apparatus 10 may be a battery or a battery pack. The energy storage apparatus 10 may further include but is not limited to an energy storage container, an energy storage cabinet, or the like.

In some embodiments, in addition to arranging the energy storage unit group 120 and the temperature and humidity sensor 130 inside the housing 110 of the energy storage apparatus 10, other components such as a module, a copper bar, and a distribution box may also be arranged.

The energy storage unit group 120 may be an energy storage element of the energy storage apparatus 10 and is a main element for realizing charging and discharging in the energy storage apparatus 10. Optionally, the energy storage unit group 120 may be a battery, a battery cell, or the like. For example, when the energy storage apparatus 10 is a battery, the energy storage unit group 120 may be a battery cell. When the energy storage apparatus 10 is a battery pack, the energy storage unit group 120 may be a battery.

The housing 110 is configured to separate the energy storage unit group 120 from the outside to protect the energy storage unit group 120. The internal environment formed in the housing 110 can accommodate the energy storage unit group 120 and the temperature and humidity sensor 130, and can also accommodate other components. The material of the housing 110 may be various, for example, including but not limited to copper, iron, aluminum, stainless steel, aluminum alloy, or plastic.

The temperature and humidity sensor 130 is a sensor device equipped with humidity-sensitive and heat-sensitive elements and capable of measuring a temperature and a humidity. Optionally, the temperature and humidity sensor 130 may use a temperature and humidity integrated probe as a temperature measuring element to collect temperature and humidity signals. After being subjected to circuit processing such as voltage stabilization and filtering, operational amplification, nonlinear correction, V/I conversion, constant current, and reverse protection, the signals are converted into current signals or voltage signals that have a linear relationship with temperature and humidity for output. Using the temperature and humidity sensor 130 to monitor the interior of the housing 110 can simplify the structure of the energy storage apparatus 10 and can also reduce space inside the housing 110 of the energy storage apparatus 10.

The processor 140 may be an integrated circuit chip with signal processing capability, and is used to process signals related to the energy storage apparatus 10, thereby being able to analyze the working state of the energy storage apparatus 10, so as to realize digitization, standardization, and intelligence of the energy storage apparatus 10. For example, the processor 140 may further include but is not limited to a microcontroller unit (Microcontroller Unit, MCU), a general-purpose processor, or the like.

By arranging the processor 140 outside the housing 110, the processor 140 does not occupy the space inside the housing 110. In addition, fixing the processor 140 to the housing 110 can also improve the connection stability between the processor 140 and the temperature and humidity sensor 130 and other components.

By arranging the temperature and humidity sensor 130 inside the housing 110 of the energy storage apparatus 10, real-time detection of the real-time temperature and real-time humidity inside the housing 110 can be realized, and the environment inside the housing 110 can be monitored in time. Moreover, the environment inside the housing 110 can be determined more accurately according to the real-time temperature and real-time humidity, thereby facilitating subsequent corresponding processing on the environment inside the housing 110.

In some embodiments, the energy storage apparatus 10 may further include a liquid cooling apparatus 150. The liquid cooling apparatus 150 may be arranged outside the housing 110 and may be configured to cool the housing 110 and the energy storage unit group 120 through circulation of cooling liquid.

Optionally, the liquid cooling apparatus 150 may include a plurality of parallel liquid cooling pipelines 151, and each liquid cooling pipeline 151 may be configured to cool the housing 110 and the energy storage unit group 120 through circulation of cooling liquid when turned on.

Optionally, the liquid cooling pipeline 151 may be arranged outside the housing 110 and may be arranged around the housing 110 to increase the contact area between the liquid cooling apparatus 150 and the housing 110.

Since the conductive elements such as the energy storage unit group 120 inside the energy storage apparatus 10 gradually heat up in the charging and discharging process of the energy storage apparatus 10, arranging the liquid cooling apparatus 150 can realize adjustment and control of the real-time temperature inside the housing 110 of the energy storage apparatus 10 to maintain the stability of the temperature inside the housing 110 of the energy storage apparatus 10.

Optionally, the liquid cooling apparatus 150 may be connected to the processor 140, and the processor 140 may be configured to control the liquid cooling apparatus 150 to control the temperature inside the energy storage apparatus 10. For example, the processor 140 can realize adjustment of the real-time temperature inside the energy storage apparatus 10 by controlling physical quantities such as the temperature of the cooling liquid in the liquid cooling apparatus 150 and the circulation speed of the cooling liquid.

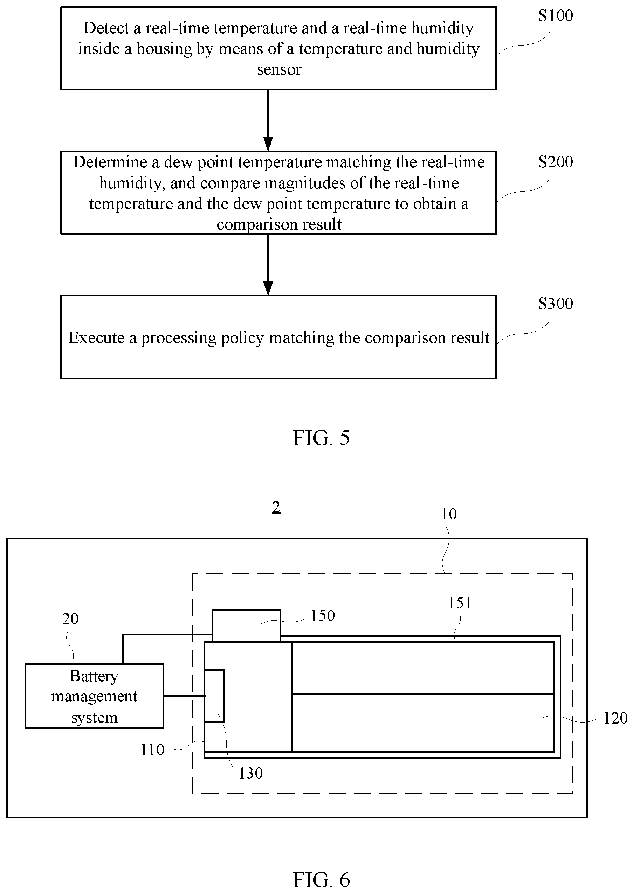

According to some embodiments, as shown in FIG. 5, this application provides a monitoring method for the energy storage apparatus 10. The monitoring method for the energy storage apparatus 10 is exemplarily described below.

The energy storage apparatus 10 includes a housing 110, an energy storage unit group 120, and a temperature and humidity sensor 130. The energy storage unit group 120 and the temperature and humidity sensor 130 are arranged inside the housing 110. The monitoring method for the energy storage apparatus 10 may include the following steps:
S100: Detect a real-time temperature and a real-time humidity inside the housing by means of the temperature and humidity sensor.

Since the temperature and humidity inside the housing 110 can intuitively reflect the environment faced by elements inside the housing 110, and excessively high or low temperature and high humidity can directly affect the use of conductive elements such as the energy storage unit group 120, and may even directly damage the conductive elements such as the energy storage unit group 120. Therefore, using the temperature and humidity sensor 130 inside the housing 110 to detect the temperature and humidity inside the housing 110 makes it more convenient and intuitive to monitor the internal environment of the housing 110, so as to realize digitization, standardization, and intelligence of the internal environment of the energy storage apparatus 10.

In some embodiments, the step of detecting a real-time temperature and a real-time humidity inside the housing 110 by means of the temperature and humidity sensor 130 may include the following step S110:
S110: In a process of outputting electric energy or charging, detect the real-time temperature and real-time humidity inside the housing by means of the temperature and humidity sensor.

Since when the energy storage apparatus 10 outputs electric energy or is charged, conductive elements such as the energy storage unit group 120 inside the housing 110 have higher requirements for the environment inside the housing 110. Especially after outputting electric energy or being charged for a long time, the temperature of each conductive element rises. Moreover, the energy storage apparatus 10 usually further includes a liquid cooling apparatus 150 to cool the interior of the energy storage apparatus 10. Therefore, in a process of the energy storage apparatus 10 outputting electric energy or is charged and when the liquid cooling apparatus 150 performs cooling, water mist, condensed water, or the like is extremely likely to be generated inside the housing 110. This greatly reduces the electrical clearance and creepage distance between the conductive elements, thereby affecting the operation and use of each conductive element.

Therefore, detecting the real-time temperature and real-time humidity inside the housing 110 in the working process of electric energy outputting or charging of the energy storage apparatus 10 enables more efficient and timely detection of the environment inside the housing 110, so as to facilitate subsequent maintenance of the stability of the internal environment of the housing 110.

S200: Determine a dew point temperature matching the real-time humidity, and compare magnitudes of the real-time temperature and the dew point temperature to obtain a comparison result.

The dew point temperature refers to a temperature at which the air is cooled to saturation when the water vapor content in the air remains unchanged and the air pressure is kept constant. In other words, the dew point temperature is a temperature at which water vapor and water reach an equilibrium state. When the real-time temperature inside the housing 110 reaches the dew point temperature or falls below the dew point temperature, the water vapor in the air inside the housing 110 will condense to form small water droplets.

The water droplets inside the housing 110 affect the electrical clearance and creepage distance between the conductive elements inside the housing 110. Therefore, comparing the real-time temperature of the internal environment of the housing 110 with the corresponding dew point temperature inside the housing 110 can determine whether the interior of the housing 110 satisfies the corresponding condensation conditions.

In some embodiments, the determining a dew point temperature matching the real-time humidity may include the following step S210:
S210: Determine the dew point temperature matching the real-time humidity in an enthalpy diagram.

The enthalpy diagram (Enthalpy diagram) is used to represent the relationship between various parameters of air. The enthalpy diagram can be drawn according to parameters such as temperature, relative humidity, and enthalpy value. Corresponding other parameters such as humidity, moisture content, and enthalpy can also be searched for in the enthalpy diagram through related parameters such as temperature, relative humidity, and enthalpy value. Before the energy storage apparatus 10 normally applies the monitoring method described in this application, the internal environment of the housing 110 of the energy storage apparatus 10 can be tested, and an enthalpy diagram matching the internal environment of the housing 110 can be drawn using parameters such as air pressure, humidity, and temperature inside the housing 110.

The dew point temperature is determined by the air pressure, humidity, and temperature in the air. Therefore, after knowing the real-time humidity and temperature, the dew point temperature corresponding to the internal environment of the housing 110 can be simply and accurately searched for by using the enthalpy diagram, which can simplify the process of obtaining the dew point temperature and make the monitoring method for an energy storage apparatus 10 more efficient.

S300: Execute a processing policy matching the comparison result.

After obtaining the comparison result between the real-time temperature and the dew point temperature, the comparison result can reflect whether the environment inside the housing 110 satisfies the condensation condition. If the comparison result is that the real-time temperature is greater than the dew point temperature, it indicates that the environment inside the housing 110 does not satisfy the condensation condition, and condensation most likely has not occurred inside the housing 110. If the comparison result is that the real-time temperature is less than or equal to the dew point temperature, it indicates that the environment inside the housing 110 satisfies the condensation condition, and condensation is highly likely to occur inside the housing 110.

Further, different processing policies can be executed for different comparison results.

In some embodiments, the executing a processing policy matching the comparison result may include the following step S310:
S310: If the comparison result is that the real-time temperature is less than or equal to the dew point temperature, output warning information prompting that condensation likely occurs in the housing 110.

Specifically, when the comparison result is that the real-time temperature is less than or equal to the dew point temperature, it indicates that condensation is highly likely to occur inside the housing 110. Therefore, outputting the corresponding warning information in time in this case can feed back a danger inside the housing 110 of the energy storage apparatus 10 in a timely manner, so as to facilitate further maintenance of the energy storage apparatus 10 subsequently.

In some embodiments, the warning information may include but is not limited to display screen prompt information, indicator light warning information, sound warning information, or the like.

In some embodiments, the energy storage apparatus 10 may include a liquid cooling apparatus 150. The liquid cooling apparatus 150 may be arranged outside the housing 110 and may be configured to cool the housing 110 and the energy storage unit group 120 through circulation of cooling liquid.

In some embodiments, the step of executing a processing policy matching the comparison result may alternatively include step S320:
S320: If the comparison result is that the real-time temperature is less than or equal to the dew point temperature, control the liquid cooling apparatus to adjust a temperature and/or circulation speed of the cooling liquid, thereby making the real-time temperature greater than the dew point temperature.

If the comparison result is that the real-time temperature is less than or equal to the dew point temperature, it indicates that condensation may have occurred inside the housing 110, and condensed water droplets or water mist may have appeared inside the housing 110. In order to eliminate the condensed water droplets or water mist inside the housing 110, the real-time temperature needs to be raised to be greater than the dew point temperature.

The real-time temperature inside the housing 110 is related to the temperature and/or circulation speed of the cooling liquid in the liquid cooling apparatus 150. Therefore, the cooling speed of the liquid cooling apparatus 150 can be adjusted by controlling the liquid cooling apparatus 150 to adjust the temperature and/or circulation speed of the cooling liquid, so as to increase the real-time temperature inside the housing 110.

By directly using the liquid cooling apparatus 150 to adjust the real-time temperature inside the energy storage apparatus 10 after it is determined that the real-time temperature is less than or equal to the dew point temperature, the real-time temperature can be quickly adjusted to be greater than the dew point temperature. This allows the internal environment of the energy storage apparatus 10 to quickly escape from condensation conditions, thereby achieving precise control of the internal environment of the energy storage apparatus 10; and can also reduce the accumulation of condensed water and excessive internal humidity inside the energy storage apparatus 10 in time, thereby reducing the occurrence of the conductive elements inside the energy storage apparatus 10 being in a condensation environment for a long time, so as to more effectively protect the energy storage apparatus 10.

In some embodiments, the energy storage apparatus 10 may include a liquid cooling apparatus 150. The liquid cooling apparatus 150 may be arranged outside the housing 110. The liquid cooling apparatus 150 may include a plurality of parallel liquid cooling pipelines 151, and each liquid cooling pipeline 151 may be configured to cool the housing 110 and the energy storage unit group 120 through circulation of cooling liquid when turned on.

By arranging the plurality of parallel liquid cooling pipelines 151, the contact area between the liquid cooling apparatus 150 and the housing 110 can be increased to improve the cooling speed of the liquid cooling apparatus 150, thereby enabling more rapid adjustment of the real-time temperature inside the housing 110, and more effectively maintaining the stability of the internal environment of the housing 110 of the energy storage apparatus 10.

In some embodiments, the step of executing a processing policy matching the comparison result may alternatively include step S330:
S330: If the comparison result is that the real-time temperature is less than or equal to the dew point temperature, control the liquid cooling apparatus 150 to control at least one of the liquid cooling pipelines 151 to be turned on, so that the real-time temperature is greater than the dew point temperature.

If the comparison result is that the real-time temperature is less than or equal to the dew point temperature, it indicates that condensation may have occurred inside the housing 110 and the humidity inside the housing 110 is too high. In this case, by controlling the liquid cooling apparatus 150 to control at least one liquid cooling pipeline 151 to be turned on to cool the housing 110 and the energy storage unit group 120, the temperature adjustment speed of the liquid cooling apparatus 150 can be enhanced, making the regulation process of the liquid cooling apparatus 150 more flexible.

In some embodiments, the step of controlling the liquid cooling apparatus 150 to control at least one of the liquid cooling pipelines 151 to be turned on may include: controlling the liquid cooling apparatus 150 to control the at least one of the liquid cooling pipelines 151 to be turned on and adjusting a temperature and/or circulation speed of the cooling liquid in the corresponding liquid cooling pipeline 151.

Since the liquid cooling apparatus 150 cools the interior of the housing 110 of the energy storage apparatus 10 through at least one liquid cooling pipeline 151, the real-time temperature in the interior of the housing 110 of the energy storage apparatus 10 is related to the temperature and/or circulation speed of the cooling liquid in the at least one liquid cooling pipeline 151. Therefore, when it is determined that the real-time temperature is less than or equal to the dew point temperature, by controlling at least one liquid cooling pipeline 151 to be turned on and adjusting the temperature and/or circulation speed of the cooling liquid inside the liquid cooling pipeline 151 in time to ensure that the real-time temperature is greater than the dew point temperature, the temperature control process performed by the liquid cooling apparatus 150 on the interior of the energy storage apparatus 10 can be made faster and more convenient, thereby reducing condensed water accumulation and excessive internal humidity inside the housing 110 of the energy storage apparatus 10.

In some embodiments, the step of controlling the liquid cooling apparatus 150 to adjust a cooling temperature and/or circulation speed of the cooling liquid may include the following steps S331-S332:
S331: Calculate a temperature difference between the dew point temperature and the real-time temperature.

Specifically, after determining the comparison result between the dew point temperature and the real-time temperature, the temperature difference between the dew point temperature and the real-time temperature is further calculated.

S332: Control the liquid cooling apparatus to adjust the temperature and/or circulation speed of the cooling liquid, according to a correspondence between the temperature difference and the temperature and/or circulation speed of the cooling liquid.

For example, if the dew point temperature corresponding to the interior of the housing 110 is 30°C, the real-time temperature is 20°C, the temperature difference between the dew point temperature and the real-time temperature is 10°C, and the temperature of the cooling liquid is 10°C, the temperature of the cooling liquid can be adjusted to 35°C or 40°C greater than the dew point temperature, so that the real-time temperature inside the housing 110 rises, making the real-time temperature inside the housing 110 quickly rise from 20°C to above 30°C. Optionally, if the circulation speed of the cooling liquid is 2m/s, the circulation speed of the cooling liquid can be reduced while adjusting and increasing the temperature of the cooling liquid. For example, it can be reduced to 1m/s, 0.5m/s, or the like, so that the cooling liquid has sufficient time to adjust the real-time temperature inside the housing 110.

By using the temperature difference between the dew point temperature and the real-time temperature to adjust the temperature and/or circulation speed of the cooling liquid of the liquid cooling apparatus 150, the control process performed by the liquid cooling apparatus 150 on the internal environment of the energy storage apparatus 10 can be made simpler; and the real-time temperature inside the energy storage apparatus 10 can be quickly raised to be higher than the dew point temperature, thereby reducing the accumulation of condensed water and excessive internal humidity inside the energy storage apparatus 10, and more effectively maintaining the operation and use of the energy storage apparatus 10.

In some other embodiments, the step of controlling the liquid cooling apparatus 150 to control the cooling liquid to enter at least one of the liquid cooling pipelines 151 may further include steps S333-S334:
S333: Calculate a temperature difference between the dew point temperature and the real-time temperature.
S334: Determine the turn-on number of liquid cooling pipelines that matches the temperature difference, and control the liquid cooling apparatus 150 to turn on the turn-on number of liquid cooling pipelines.

For example, the number of liquid cooling pipelines 151 of the liquid cooling apparatus 150 is 4. When the energy storage apparatus 10 is normally charged and discharged, all four liquid cooling pipelines 151 are turned on to simultaneously cool the interior of the housing 110 of the energy storage apparatus 10 for temperature reduction. After determining that the real-time temperature inside the housing 110 is less than the dew point temperature, the temperature difference between the dew point temperature and the real-time temperature can be further calculated, and the turn-on number of liquid cooling pipelines 151 is determined according to the temperature difference. For example, if the temperature difference is 10°C, and if the turn-on number of liquid cooling pipelines 151 that matches this temperature difference is 2, 1, or 0, the liquid cooling apparatus 150 is further controlled to correspondingly turn on 2, 1, or 0 liquid cooling pipelines 151, and turn off remaining liquid cooling pipelines 151, thereby reducing the cooling speed of the energy storage apparatus 10 or stopping cooling, and using the thermal effect of each conductive element inside the housing 110 of the energy storage apparatus 10 to make the real-time temperature inside the housing 110 rise. Optionally, the real-time temperature inside the housing 110 can alternatively be made to rise by adjusting the temperature of the cooling liquid in the liquid cooling pipeline 151.

Alternatively, if when the energy storage apparatus 10 is normally charged and discharged, two liquid cooling pipelines 151 are both turned on and cool the interior of the housing 110 of the energy storage apparatus 10. After determining that the real-time temperature inside the housing 110 is less than the dew point temperature, the temperature difference between the dew point temperature and the real-time temperature is further calculated. The turn-on number of liquid cooling pipelines 151 that matches the temperature difference may be 3 or 4 to improve the regulation capability of the liquid cooling apparatus 150 on the real-time temperature inside the energy storage apparatus 10. In addition, the liquid cooling apparatus 150 can further adjust the temperature of the cooling liquid to increase the real-time temperature inside the energy storage apparatus 10.

By using the temperature difference between the dew point temperature and the real-time temperature to determine the matching turn-on number of liquid cooling pipelines 151, and controlling the liquid cooling apparatus 150 to turn on the turn-on number of liquid cooling pipelines 151, the process of the liquid cooling apparatus 150 adjusting the real-time temperature can also be made more efficient. The temperature control process of the liquid cooling apparatus 150 can be made more flexible, so that the energy storage apparatus 10 achieves efficient temperature control while energy consumption can also be reduced.

In some embodiments, the step of determining the turn-on number of liquid cooling pipelines 151 that matches the temperature difference, and controlling the liquid cooling apparatus 150 to turn on the turn-on number of liquid cooling pipelines 151 may include steps S335-S336:
S335: Determine the turn-on number of liquid cooling pipelines that matches the temperature difference, and determine a temperature and/or circulation speed of the cooling liquid in the liquid cooling pipeline to be turned on.

Specifically, after obtaining the turn-on number of liquid cooling pipelines 151, the temperature and/or circulation speed of the cooling liquid in the liquid cooling pipeline 151 can be further calculated according to the turn-on number of liquid cooling pipelines 151, so that the liquid cooling apparatus 150 can perform efficient temperature regulation on the interior of the housing 110 according to real-time conditions.

For example, if the dew point temperature inside the housing 110 of the energy storage apparatus 10 is 30°C, the real-time temperature is 20°C, the temperature of the cooling liquid is 15°C, and the circulation speed of the cooling liquid is 2m/s, it can be obtained that the temperature difference between the dew point temperature and the real-time temperature inside the housing 110 of the energy storage apparatus 10 is 10°C. If the turn-on number of liquid cooling pipelines 151 corresponding to this temperature difference is 2, the temperatures of the cooling liquids in these two liquid cooling pipelines 151 can be adjusted to 40°C. Optionally, the circulation speed of the cooling liquid can be reduced to 0.5m/s.

If the turn-on number of liquid cooling pipelines 151 corresponding to this temperature difference is 3, the temperatures of the cooling liquids in these three liquid cooling pipelines 151 can be adjusted to 35°C. Optionally, the circulation speed of the cooling liquid can be reduced to 1m/s.

The matching result between the turn-on number of liquid cooling pipelines 151 and the temperature and/or circulation speed of the cooling liquid can be obtained through testing before the energy storage apparatus 10 is put into normal use.

Using the turn-on number of liquid cooling pipelines 151 to calculate and determine the temperature and/or circulation speed of the cooling liquid in the liquid cooling pipelines 151 can make the temperature control process of the energy storage apparatus 10 more standardized and efficient; and can also control energy consumption and reduce costs while high-degree temperature control inside the energy storage apparatus 10 is performed. This is not prone to cause resource waste.

S336: Control the liquid cooling apparatus to turn on the turn-on number of liquid cooling pipelines, and control the corresponding liquid cooling pipeline to perform circulating cooling according to the determined temperature and/or circulation speed of the cooling liquid.

According to the corresponding matching result, turning on the turn-on number of liquid cooling pipelines 151 and controlling the temperature and/or circulation speed of the cooling liquid to perform circulating cooling can make the temperature control process of the energy storage apparatus 10 more intelligent and standardized.

In some embodiments, after determining that the real-time temperature is less than or equal to the dew point temperature, the method may further include the following step S400:

S400: If the comparison result is that the real-time temperature is greater than the dew point temperature, control the liquid cooling apparatus to turn on a heat preservation mode, so as to control a temperature and/or circulation speed of the cooling liquid according to the heat preservation mode, so that a difference between the real-time temperature and the dew point temperature is less than a preset temperature threshold.

Turning on the heat preservation mode after determining that the real-time temperature inside the housing 110 is greater than the dew point temperature can maintain the stability of the internal environment of the energy storage apparatus 10 as much as possible, thereby making it less likely for condensation or excessive humidity to occur inside the housing 110, and more effectively preventing condensation from occurring inside the housing 110 of the energy storage apparatus 10.

In other embodiments, after determining that the real-time temperature is less than or equal to the dew point temperature, other methods and measures may alternatively be used to maintain the stability of the internal environment of the energy storage apparatus 10.

For example, a gas extraction hole communicating the interior and exterior of the housing 110 and a gas extraction device may be arranged on the housing 110 of the energy storage apparatus 10. After determining that the real-time temperature is greater than the dew point temperature, or after determining that the real-time temperature is less than or equal to the dew point temperature and executing the processing policy matching the comparison result so that the real-time temperature is greater than the dew point temperature, the gas extraction device is used to extract gas from the housing 110 of the energy storage apparatus 10 to extract water vapor from the housing 110 of the energy storage apparatus to the outside of the housing 110, thereby reducing the real-time humidity inside the housing 110 to maintain the stability of the internal environment of the energy storage apparatus 10.

Certainly, there may be other different methods and measures in other embodiments, which are not specifically listed one by one in this embodiment.

According to some embodiments of this application, as shown in FIG. 6, this application provides an electric apparatus 2, which may include an energy storage apparatus 10 and a battery management system 20. The energy storage apparatus 10 includes a housing 110, an energy storage unit group 120, and a temperature and humidity sensor 130. The energy storage unit group 120 and the temperature and humidity sensor 130 are arranged inside the housing 110. The battery management system 20 is electrically connected to the temperature and humidity sensor 130 and is configured to implement the monitoring method for the energy storage apparatus 10 in the above embodiments.

The battery management system 20 may be a system with processing function and has signal processing capability for processing signals related to the energy storage apparatus 10, thereby facilitating analysis of the working state of the energy storage apparatus 10 so as to realize digitization, standardization, and intelligence of the energy storage apparatus 10. For example, the battery management system 20 may be a BMS system (BATTERY MANAGEMENT SYSTEM), which can intelligently manage and maintain each battery cell, monitor the state of the battery, and prevent the battery from overcharging and overdischarging, so as to extend the service life of the battery. The battery management system 20 may include elements such as a microcontroller unit (Microcontroller Unit, MCU) and a general-purpose processor 140.

Specifically, the real-time temperature and real-time humidity obtained by real-time detection by the temperature and humidity sensor 130 are transmitted to the battery management system 20 in real time. After receiving the real-time temperature and real-time humidity, the battery management system 20 can implement the monitoring method for the energy storage apparatus 10 in the above embodiments to maintain the internal environment of the energy storage apparatus 10.

Optionally, the battery management system 20 may also be connected to the liquid cooling apparatus 150 of the energy storage apparatus 10. The battery management system 20 can realize adjustment of the real-time temperature inside the housing 110 of the energy storage apparatus 10 by controlling the liquid cooling apparatus 150.

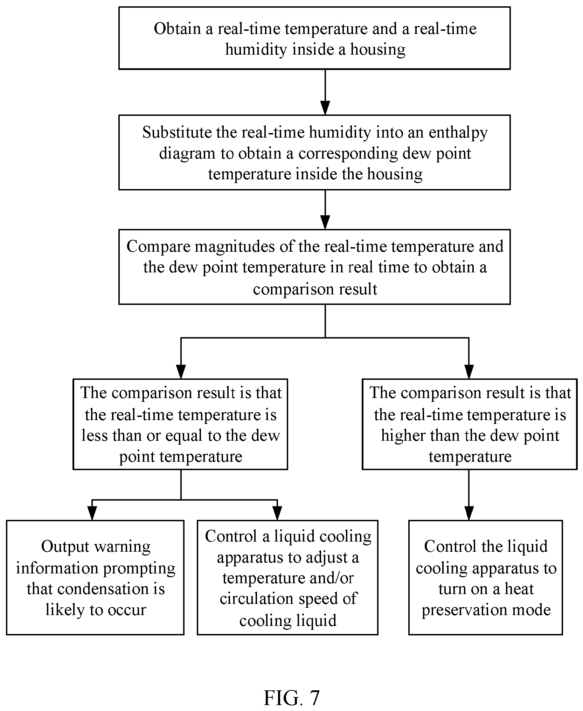

As shown in FIG. 7, FIG. 7 is an embodiment of the monitoring method for the energy storage apparatus 10. The battery management system 20 can implement and execute the monitoring method for the energy storage apparatus 10 shown in FIG. 7.

According to some embodiments of this application, as shown in FIG. 4, this application provides an energy storage apparatus 10, which includes a housing 110, an energy storage unit group 120, a temperature and humidity sensor 130, and a processor 140. The energy storage unit group 120 is arranged inside the housing 110. The temperature and humidity sensor 130 is arranged inside the housing 110. The processor 140 is arranged on the housing 110, is electrically connected to the temperature and humidity sensor 130, and is configured to execute the monitoring method for the energy storage apparatus 10 in the above embodiments.

The processor 140 can receive real-time temperature and real-time humidity signals transmitted by the temperature and humidity sensor 130 and execute the monitoring method for the energy storage apparatus 10 in the above embodiments.

Optionally, the processor 140 may also be connected to the liquid cooling apparatus 150 of the energy storage apparatus 10. The processor 140 can adjust the real-time temperature inside the housing 110 of the energy storage apparatus 10 by controlling the liquid cooling apparatus 150.

As shown in FIG. 7, FIG. 7 is an embodiment of a monitoring method for the energy storage apparatus 10. The processor 140 can implement and execute the monitoring method for the energy storage apparatus 10 shown in FIG. 7.

According to some embodiments of this application, as shown in FIG. 4 and FIG. 5, this application provides a monitoring method for an energy storage apparatus 10. The energy storage apparatus 10 includes a housing 110, an energy storage unit group 120, and a temperature and humidity sensor 130. The energy storage unit group 120 and the temperature and humidity sensor 130 are arranged inside the housing 110. The method includes: detecting a real-time temperature and a real-time humidity inside the housing 110 by means of temperature and humidity sensor 130; determining a dew point temperature matching the real-time humidity, and comparing magnitudes of the real-time temperature and the dew point temperature to obtain a comparison result; and executing a processing policy matching the comparison result. The determining a dew point temperature matching the real-time humidity includes: determining the dew point temperature matching the real-time humidity in an enthalpy diagram. The executing a processing policy matching the comparison result includes: if the comparison result is that the real-time temperature is less than or equal to the dew point temperature, outputting warning information prompting that condensation likely occurs in the housing 110. The energy storage apparatus 10 includes a liquid cooling apparatus 150. The liquid cooling apparatus 150 is arranged outside the housing 110 and is configured to cool the housing 110 and the energy storage unit group 120 through circulation of cooling liquid. The executing a processing policy matching the comparison result includes: if the comparison result is that the real-time temperature is less than or equal to the dew point temperature, controlling the liquid cooling apparatus 150 to adjust a temperature and/or circulation speed of the cooling liquid, thereby making the real-time temperature greater than the dew point temperature. The controlling the liquid cooling apparatus 150 to adjust a cooling temperature and/or circulation speed of the cooling liquid includes: calculating a temperature difference between the dew point temperature and the real-time temperature; and controlling the liquid cooling apparatus 150 to adjust the temperature and/or circulation speed of the cooling liquid, according to a correspondence between the temperature difference and the temperature and/or circulation speed of the cooling liquid. The energy storage apparatus 10 includes a liquid cooling apparatus 150. The liquid cooling apparatus 150 is arranged outside the housing 110. The liquid cooling apparatus 150 includes a plurality of parallel liquid cooling pipelines 151. Each of the liquid cooling pipelines 151 is configured to cool the housing 110 and the energy storage unit group 120 through circulation of cooling liquid when turned on. The executing a processing policy matching the comparison result includes: if the comparison result is that the real-time temperature is less than or equal to the dew point temperature, controlling the liquid cooling apparatus 150 to control at least one of the liquid cooling pipelines 151 to be turned on, so that the real-time temperature is greater than the dew point temperature. The controlling the liquid cooling apparatus 150 to control the cooling liquid to enter at least one of the liquid cooling pipelines 151 includes: calculating a temperature difference between the dew point temperature and the real-time temperature; and determining the turn-on number of liquid cooling pipelines 151 that matches the temperature difference, and controlling the liquid cooling apparatus 150 to turn on the turn-on number of liquid cooling pipelines 151. The determining the turn-on number of liquid cooling pipelines 151 that matches the temperature difference, and controlling the liquid cooling apparatus 150 to turn on the turn-on number of liquid cooling pipelines 151 includes: determining the turn-on number of liquid cooling pipelines 151 that matches the temperature difference, and determining a temperature and/or circulation speed of the cooling liquid in the liquid cooling pipelines 151 to be turned on; and controlling the liquid cooling apparatus 150 to turn on the turn-on number of liquid cooling pipelines 151, and controlling the corresponding liquid cooling pipelines 151 to perform circulating cooling according to the determined temperature and/or circulation speed of the cooling liquid. The controlling the liquid cooling apparatus 150 to control at least one of the liquid cooling pipelines 151 to be turned on includes: controlling the liquid cooling apparatus 150 to control the at least one of the liquid cooling pipelines 151 to be turned on, and adjusting a temperature and/or circulation speed of the cooling liquid in the corresponding liquid cooling pipeline 151. The detecting a real-time temperature and a real-time humidity inside the housing 110 by means of the temperature and humidity sensor 130 includes: in a process of outputting electric energy or charging, detecting the real-time temperature and real-time humidity inside the housing 110 by means of the temperature and humidity sensor 130. The energy storage apparatus 10 includes a liquid cooling apparatus 150. The liquid cooling apparatus 150 is arranged outside the housing 110 and is configured to cool the housing 110 and the energy storage unit group 120 through circulation of cooling liquid. After determining that the real-time temperature is less than or equal to the dew point temperature, the method includes: if the comparison result is that the real-time temperature is greater than the dew point temperature, controlling the liquid cooling apparatus 150 to turn on a heat preservation mode, so as to control a temperature and/or circulation speed of the cooling liquid according to the heat preservation mode, so that a difference between the real-time temperature and the dew point temperature is less than a preset temperature threshold.

According to some embodiments of this application, as shown in FIG. 6, this application provides an electric apparatus 2, which may include an energy storage apparatus 10 and a battery management system 20. The energy storage apparatus 10 includes a housing 110, an energy storage unit group 120, and a temperature and humidity sensor 130. The energy storage unit group 120 and the temperature and humidity sensor 130 are arranged inside the housing 110. The battery management system 20 is electrically connected to the temperature and humidity sensor 130 and is configured to implement the monitoring method for the energy storage apparatus 10 in the above embodiments.

According to some embodiments of this application, as shown in FIG. 4, this application provides an energy storage apparatus 10, which includes a housing 110, an energy storage unit group 120, a temperature and humidity sensor 130, and a processor 140. The energy storage unit group 120 is arranged inside the housing 110. The temperature and humidity sensor 130 is arranged inside the housing 110. The processor 140 is arranged on the housing 110, is electrically connected to the temperature and humidity sensor 130, and is configured to execute the monitoring method for the energy storage apparatus 10 in the above embodiments.

In summary, the temperature and humidity sensor 130 is arranged inside the energy storage apparatus 10, and the dew point temperature corresponding to the internal environment of the energy storage apparatus 10 is calculated through the real-time humidity and real-time temperature detected by the temperature and humidity sensor 130. Then the real-time temperature is further compared with the dew point temperature to obtain the comparison result that can reflect the internal environment of the energy storage apparatus 10, and targeted corresponding processing is performed according to the current real-time environment inside the energy storage apparatus 10. With such arrangement, not only the internal environment of the energy storage apparatus 10 can be monitored in real time, but also corresponding processing can be performed in real time for the current environment inside the energy storage apparatus 10. Therefore, during the use of the energy storage apparatus 10, conductive elements inside the energy storage apparatus 10 are less likely to be affected by the internal environment thereof, and the operation and use of the energy storage apparatus 10 can be more effectively maintained.

The foregoing descriptions are merely embodiments of this application and are not intended to limit the patent scope of this application. Any equivalent structural or procedural transformations made by using the content of the specification and drawings of this application or any direct or indirect application in other related technical fields are included in the patent protection scope of this application in the same way.

## Claims

1. A monitoring method for an energy storage apparatus, **characterized in that** the energy storage apparatus comprises a housing, an energy storage unit group and a temperature and humidity sensor, the energy storage unit group and the temperature and humidity sensor are arranged inside the housing, and the method comprises:
detecting a real-time temperature and a real-time humidity inside the housing by means of the temperature and humidity sensor;
determining a dew point temperature matching the real-time humidity, and comparing magnitudes of the real-time temperature and the dew point temperature to obtain a comparison result; and
executing a processing policy matching the comparison result.

2. The method according to claim 1, **characterized in that**
the determining a dew point temperature matching the real-time humidity comprises:
determining the dew point temperature matching the real-time humidity in the enthalpy diagram.

3. The method according to claim 1, **characterized in that**
the executing a processing policy matching the comparison result comprises:
if the comparison result is that the real-time temperature is less than or equal to the dew point temperature, outputting warning information prompting that condensation likely occurs in the housing.

4. The method according to any one of claims 1 to 3, **characterized in that**
the energy storage apparatus comprises a liquid cooling apparatus, and the liquid cooling apparatus is arranged outside the housing and is configured to cool the housing and the energy storage unit group through circulation of cooling liquid; and
the executing a processing policy matching the comparison result comprises:
if the comparison result is that the real-time temperature is less than or equal to the dew point temperature, controlling the liquid cooling apparatus to adjust a temperature and/or circulation speed of the cooling liquid, thereby making the real-time temperature greater than the dew point temperature.

5. The method according to claim 4, **characterized in that**
the controlling the liquid cooling apparatus to adjust a cooling temperature and/or circulation speed of the cooling liquid comprises:
calculating a temperature difference between the dew point temperature and the real-time temperature; and
controlling the liquid cooling apparatus to adjust the temperature and/or circulation speed of the cooling liquid, according to a correspondence between the temperature difference and the temperature and/or circulation speed of the cooling liquid.

6. The method according to claim 1, **characterized in that**
the energy storage apparatus comprises a liquid cooling apparatus, the liquid cooling apparatus is arranged outside the housing, the liquid cooling apparatus comprises a plurality of parallel liquid cooling pipelines, and each of the liquid cooling pipelines is configured to cool the housing and the energy storage unit group through circulation of the cooling liquid when turned on; and
the executing a processing policy matching the comparison result comprises:
if the comparison result is that the real-time temperature is less than or equal to the dew point temperature, controlling the liquid cooling apparatus to control at least one of the liquid cooling pipelines to be turned on, so that the real-time temperature is greater than the dew point temperature.

7. The method according to claim 6, **characterized in that**
the controlling the liquid cooling apparatus to control the cooling liquid to enter at least one of the liquid cooling pipelines comprises:
calculating a temperature difference between the dew point temperature and the real-time temperature; and
determining the turn-on number of liquid cooling pipelines that matches the temperature difference, and controlling the liquid cooling apparatus to turn on the turn-on number of liquid cooling pipelines.

8. The method according to claim 7, **characterized in that**
the determining the turn-on number of liquid cooling pipelines that matches the temperature difference, and controlling the liquid cooling apparatus to turn on the turn-on number of liquid cooling pipelines comprises:
determining the turn-on number of liquid cooling pipelines that matches the temperature difference, and determining a temperature and/or circulation speed of the cooling liquid in the liquid cooling pipeline to be turned on; and
controlling the liquid cooling apparatus to turn on the turn-on number of liquid cooling pipelines, and controlling the corresponding liquid cooling pipeline to perform circulating cooling according to the determined temperature and/or circulation speed of the cooling liquid.

9. The method according to claim 6, **characterized in that**
the controlling the liquid cooling apparatus to control at least one of the liquid cooling pipelines to be turned on comprises:
controlling the liquid cooling apparatus to control the at least one of the liquid cooling pipelines to be turned on, and adjusting a temperature and/or circulation speed of the cooling liquid in the corresponding liquid cooling pipeline.

10. The monitoring method according to claim 1, **characterized in that**
the detecting a real-time temperature and a real-time humidity inside the housing by means of the temperature and humidity sensor comprises:
in a process of outputting electric energy or charging, detecting the real-time temperature and real-time humidity inside the housing by means of the temperature and humidity sensor.

11. The monitoring method according to claim 1, **characterized in that**
the energy storage apparatus comprises a liquid cooling apparatus, and the liquid cooling apparatus is arranged outside the housing and is configured to cool the housing and the energy storage unit group through circulation of cooling liquid; and
the executing a processing policy matching the comparison result comprises:
if the comparison result is that the real-time temperature is greater than the dew point temperature, controlling the liquid cooling apparatus to turn on a heat preservation mode, so as to control a temperature and/or circulation speed of the cooling liquid according to the heat preservation mode, so that a difference between the real-time temperature and the dew point temperature is less than a preset temperature threshold.

12. An electric apparatus, **characterized by** comprising:
an energy storage apparatus comprising a housing, an energy storage unit group and a temperature and humidity sensor, wherein the energy storage unit group and the temperature and humidity sensor are arranged inside the housing; and
a battery management system electrically connected to the temperature and humidity sensor and configured to implement the monitoring method for an energy storage apparatus according to any one of claims 1 to 11.

13. An energy storage apparatus, **characterized by** comprising:
a housing;
an energy storage unit group arranged inside the housing;
a temperature and humidity sensor, wherein the temperature and humidity sensor is arranged inside the housing; and
a processor that is arranged on the housing, electrically connected to the temperature and humidity sensor, and configured to execute the monitoring method for an energy storage apparatus according to any one of claims 1 to 11.
